# EUROPÄISCHE PATENTSCHRIFT

(11) **EP 2 609 460 B1**
(45) Veröffentlichungstag und Bekanntmachung des Hinweises auf die Patenterteilung: **06.01.2021**
(21) Anmeldenummer: 11760395.1
(22) Anmeldetag: 23.08.2011
(51) Int. Cl.: G02B 7/36, G02B 21/24, G02B 21/34, G01N 21/64

(54) **VERFAHREN ZUR AUTOMATISCHEN FOKUSSIERUNG VON SUBSTRATEN BEI DER FLUORESZENZMIKROSKOPIE**
METHOD FOR FOCUSING SUBSTRATES IN AN AUTOMATED MANNER IN FLUORESCENCE MICROSCOPY
PROCÉDÉ DE MISE AU POINT AUTOMATIQUE SUR DES SUBSTRATS EN MICROSCOPIE PAR FLUORESCENCE

(30) Priorität: 23.08.2010 DE 102010035104
(43) Veröffentlichungstag der Anmeldung: 03.07.2013
(73) Patentinhaber: Euroimmun Medizinische Labordiagnostika AG, 23560 Lübeck (DE)
(72) Erfinder: MORRIN, Markus, 19217 Carlow (DE)
(86) Internationale Anmeldenummer: PCT/EP2011/004227
(87) Internationale Veröffentlichungsnummer: WO 2012/025220

(56) Entgegenhaltungen:
- WO-A1-2006/082035
- DE-A1-102005 036 529
- JP-A- 7 306 009
- JP-A- 59 088 716
- US-A- 5 781 303
- US-A1- 2001 033 414
- US-A1- 2003 057 379
- US-A1- 2008 123 185

## Beschreibung

Die Erfindung betrifft ein Verfahren zur automatisierten Untersuchung von biologischem Material mit einem Mikroskop, auf dessen Kreuztisch das biologische Material zwischen einem Objektträger oder einer Analyseplatte und wenigstens einer Abdeckung angeordnet ist, mit wenigstens einer Lichtquelle zur Belichtung des biologischen Materials sowie mit einer Bildaufnahmeeinheit, die wenigstens ein mit Hilfe des Objektivs des Mikroskops vergrößertes Bild des biologischen Materials aufnimmt und an eine Auswerteeinheit überträgt. Die beschriebene technische Lösung sieht eine Kennzeichnung vor, die von einer Einrichtung zur automatischen Fokussierung des biologischen Materials erkennbar ist, wobei die Fokussierung durch gezielte Bewegung des Kreuztisches unter Zugrundelegung der Erkennung der Kennzeichnung durchführbar ist.

Die Fluoreszenzmikroskopie stellt in der medizinischen Diagnostik ein Standardverfahren zur Untersuchung von Patientenproben dar. Hierbei besteht auch in diesem Bereich ein Bestreben in Bezug auf die Weiterentwicklung dieser Technologie darin, den Automatisierungsgrad zu erhöhen, um so die Fehlerwahrscheinlichkeit zu minimieren und die Wirtschaftlichkeit der Mikroskopie zu verbessern.

Um eine Erhöhung des Automatisierungsgrads im Labor zu erreichen, ist es einerseits denkbar, die Prozessierung der zu untersuchenden Proben, insbesondere die Verdünnungs- sowie die Inkubationsschritte, weiter zu automatisieren oder aber andererseits den Vorgang der vornehmlich visuellen Auswertung der prozessierten Proben effektiver zu gestalten. Die im Folgenden noch näher erläuterte Erfindung liegt auf dem Gebiet der Probenauswertung bzw. Befundung, wobei es auch in Bezug auf die Fluoreszenzmikroskopie grundsätzlich bereits bekannt ist, digitale Bilddaten der zu untersuchenden Proben zu erzeugen und diese zur Erstellung eines Befundes an eine Datenverarbeitungseinheit, auf der eine spezielle Laborsoftware installiert ist, zu übertragen und rechnergestützt auszuwerten.

Bei einer derart zumindest teilweise automatisierten Fluoreszenzmikroskopie ist, vor allem um eine gleichbleibend hohe Qualität bei der Erstellung eines Laborbefunds gewährleisten zu können, die Erzeugung und Auswahl qualitativ hochwertiger Bilder von herausragender Bedeutung. Ein wesentliches Qualitätsmerkmal der aufgenommenen Bilder ist letztendlich deren Schärfe, so dass der Fokussierung des zu unter suchenden biologischen Materials eine besondere Bedeutung zukommt. Für die Fokussierung des zu untersuchenden biologischen Materials bzw. der Substrate wird üblicherweise eine Vielzahl von Bildern in unterschiedlichen Ebenen aufgenommen, von denen während der elektronischen Auswertung qualitativ minderwertige Aufnahmen wieder verworfen werden.

In Bezug auf die automatisierte Fokussierung für Mikroskope sind unterschiedliche technische Lösungen bekannt. Aktive Autofokussysteme, die in der Regel in Auflichtmikroskopen verwendet werden, zeichnen sich hierbei dadurch aus, dass mit Hilfe einer Hilfslichtquelle ein Lichtpunkt oder eine Markierung auf die Oberfläche der zu untersuchenden Probe oder ein die Probe überdeckendes Deckglas projiziert, die Form, Lage oder Größe des Lichtpunktes ausgewertet und auf der Grundlage der Auswertung auf die Proben- oder Deckglasoberfläche fokussiert wird. Ein derart ausgeführtes aktives Autofokussystem ist etwa aus der DE 34 46 727 C2 bekannt und soll eine zügige automatische Fokussierung ermöglichen.

Bei Durchlichtmikroskopen kommen anstelle von aktiven in der Regel passive Autofokussysteme zum Einsatz. Passive Autofokussysteme, wie sie etwa aus DE 34 39 304 C2 bekannt sind, ermitteln auf der Grundlage eines Vergleichs der aufgenommenen Bilddaten die Fokusebene, also die Ebene, in der das schärfste Bild aufgenommen worden ist. Oftmals sind derartige Systeme allerdings vergleichsweise langsam, da eine Vielzahl von Suchläufen durchgeführt werden muss, um ein zufriedenstellendes Ergebnis zu erreichen.

Ein weiteres spezielles aktives Autofokussystem ist aus der DE 10 2010 035 104 bekannt. In dieser Druckschrift wird eine Vorrichtung zur automatischen Fokussierung schwach leuchtender Substrate beschrieben, die eine schnelle Bildfokussierung gewährleisten soll. Die vergleichweise schnelle Fokussierung soll einerseits die Effektivität der automatischen Mikroskopie erhöhen und andererseits ein Ausbleichen der Fluoreszenzfarbstoffe während des Fokussierens minimieren. Die beschriebene technische Lösung zeichnet sich dadurch aus, dass zunächst in einem Durchlichtmodus mehrere Aufnahmen getätigt werden und hieraus mittels bekannter Auswerteverfahren das schärfste Bild bestimmt wird. Nach Ausschalten der Durchlichtquelle wird der Kreuztisch des Mikroskops zu der im Durchlichtmodus bestimmten Fokusebene bewegt. Um ein Fluoreszenzbild zu erzeugen, wird nunmehr eine Anregungslichtquelle aktiviert. Da jedoch die Fluoreszenz in verschiedenen Ebenen in Bezug auf die Stärke des Substrats variieren kann, ist es regelmäßig erforderlich, die Fokusebene in der Fluoreszenz noch gegenüber der im Durchlichtmodus bestimmten Fokusebene anzupassen. Zur Bestimmung der exakten Fokusebene müssen allerdings aufgrund der zuvor erfolgten Vorfokussierung im Durchlichtmodus lediglich wenige Bilder in einem vergleichsweise kleinen Suchbereich aufgenommen werden. Die letztendlich in der exakten Fokusebene liegenden Fluoreszenzbilder werden mit Hilfe einer Digitalkamera aufgenommen und zur weiteren Befundung an eine Datenverarbeitungseinheit übertragen.

Die DE 10 2005 036529 A1 offenbart ein Verfahren zur Fokussierung eines Mikroskops auf biologisches Material, welches direkt auf einen Objektträger aufgebracht ist. Das biologische Material wird hierbei belichtet, wobei mit einer Bildaufnahmeeinheit und mit Hilfe des Objektivs ein des biologischen Materials aufgenommen und an eine Auswerteeinheit übertragen wird. Ferner wird zur automatischen Fokussierung eine Kennzeichnung detektiert.

Ein Ziel der Weiterentwicklung von Autofokussystemen in der Fluoreszenzmikroskopie ist stets, die für die Fokussierung benötigte Zeit bzw. die Anzahl der während der Fokussierung aufgenommenen und für die spätere Untersuchung des Substrats nicht zu verwendenden Bilder zu minimieren. Hierzu ist aus der DE 101 00 247 A1 ein weiteres Verfahren zur automatischen Fokussierung eines Substrats bei der Fluoreszenzmikroskopie bekannt, mit dem der Objektiv-Fokus hochgenau und trotzdem innerhalb eines vergleichsweise kleinen Zeitraums bestimmbar ist. Beschrieben wird in diesem Fall ein Interferenzmikroskop bei dem eine Fläche der Objektträgereinheit mit einer lichtmikroskopisch detektierbaren Beschichtung versehen ist. Das reflektierte Licht wird von einem Detektor detektiert und anhand der Detektionssignale wird die Phasenlage im Objektbereich des Interferenzmikroskops geschlossen. Auf diese Weise ist es schließlich möglich, das Interferenzmikroskop auf geeignete Weise zu justieren.

Die zuvor beschriebenen Mikroskope mit automatischer oder zumindest teilautomatisierter Fokussierung werden vielfach verwendet, um spezielle Proteine mit Hilfe von Antikörpern sichtbar zu machen. Auf diese Weise wird bestimmt, in welchem Gewebe ein spezielles Protein vorhanden und in welchem Kompartment einer Zelle es lokalisiert ist. In vielen Fällen wird für diese Antikörperfärbung fixiertes Gewebe verwendet, das aus Gewebeschnitten besteht. Derartige Gewebeschnitte werden erzeugt, indem zunächst ein Gefrierschnitt eines gesunden Gewebes hergestellt und auf die Oberfläche eines Glasträgers, insbesondere eines Objektträgers oder eines Deckglases, aufgebracht wird. Anschließend wird das Gewebe aufgetaut und angetrocknet. In der Regel sind die Gewebeschnitte bei den bekannten Testsystemen auf Standardobjektträgern befestigt, wobei für jeden Gewebeschnitt ein separater Standardobjektträger verwendet wird.

Neben der zuvor beschriebenen Möglichkeit der Untersuchung einer Patientenprobe mit Hilfe eines auf einem Standardobjektträger angeordneten Gewebeschnitts ist die sogenannte Biochip-Technologie der Firma Euroimmun AG bekannt. Im Gegensatz zur konventionellen Technik der indirekten Immunfluoreszenz, bei der immer ein Gewebeschnitt auf einem für die Untersuchung bereitgestellten Standardobjektträger befestigt wird, bietet diese Technologie aufgrund einer Miniaturisierung der zu untersuchenden Proben die Möglichkeit, die Bestimmung von Autoantikörpern und Infektionsantikörpern zu standardisieren. Die Arbeit im Labor wird auf diese Weise vereinfacht und effizienter.

Bei den Biochips der Firma Euroimmun handelt es um vergleichsweise kleine Träger mit biologischem Material. Hierbei wird der Effekt ausgenutzt, das sehr kleine Gewebeschnitte für eine Untersuchung hergestellt und verwendet werden können, sofern diese auf ein den Schnitt tragendes Substrat aufgebracht und gemeinsam mit diesem Substrat wiederum auf einem Objektträger oder einer Analyseplatte befestigt werden. Während es sich bei einem Standarddeckglas um ein etwa 100 µm bis 200 µm dünnes, rechteckiges oder rundes Glasplättchen handelt, das vielfach eine Fläche von 18 x 18 mm² aufweist, sind Biochips mit geeignetem biologischem Material beschichtete Deckglas-Fragmente, die somit eine vielfach kleinere Oberfläche aufweisen. Biochips zeichnen sich gegenüber Standarddeckgläsern daher einerseits durch einen deutlich geringeren Platzbedarf aus, andererseits wird die Menge des benötigten Gewebes erheblich reduziert.

Bei der Herstellung eines Biochips wird zunächst ebenfalls ein Gefrierschnitt des benötigten Gewebes auf ein Standarddeckglas aufgebracht, dann teilweise aufgetaut und angetrocknet. Anschließend wird das Deckglas mit dem Gewebe fragmentiert, indem im Bereich des Gewebeschnittes mit einer Diamantspitze oder einem Laser Kerblinien erzeugt werden, entlang der das beschichtete Deckglas gebrochen und so in Segmente unterteilt wird. Um eine verbesserte, insbesondere effektivere Untersuchung zu ermöglichen, werden die Biochips auf geeignete Reaktionsfelder eines Objektträgers aufgebracht. In diesem Zusammenhang ist es denkbar, auf einem Objektträger eine Mehrzahl von Reaktionsfeldern für entsprechende Biochips vorzusehen, wobei auf einem Reaktionsfeld auch mehr als ein Biochip, vorzugsweise mit unterschiedlichen Geweben, vorgesehen sein kann. Um die Untersuchung einer Patientenprobe besonders effektiv zu gestalten, werden geeignete Biochip-Mosaike™ gebildet, indem eine Mehrzahl von Reaktionsfeldern mit entsprechenden Biochips auf einem Objektträger bereitgestellt wird.

Gleichgültig ob für die Untersuchung einer Patientenprobe ein Gewebeschnitt, der sich auf einem Standarddeckglas befindet, oder ein Biochip bzw. spezielle Biochip-Mosaike™ verwendet werden, ist der grundsätzliche Ablauf sowohl der Probenprozessierung, insbesondere der Verdünnung des Patientenserums sowie der Inkubation des Gewebeschnitts, als auch der visuellen Untersuchung mit Hilfe eines Mikroskops gleich.

Während der Prozessierung der Probe wird das Gewebe mit verdünntem Patientenserum, das auf das Vorhandensein spezieller Antikörper untersucht werden soll, sowie einem Konjugat, das üblicherweise von einem Tier stammende Antikörper, die mit einem fluoreszierenden Stoff markiert und gegen die im Patientenserum vermuteten Antikörper gerichtet sind, inkubiert. Sofern das Patientenserum Antikörper gegen die Antigene des Gewebeschnitts aufweist, binden sowohl diese Antikörper an den Gewebeschnitt als auch die fluoreszenzmarkierten Sekundärantikörper an die am Gewebeschnitt hängenden menschlichen Antikörper. Mit Hilfe eines Fluoreszenzmikroskops lässt sich schließlich der an die entsprechenden Gewebestrukturen gebundene Fluoreszenzfarbstoff nachweisen.

Vor dem Mikroskopieren wird der inkubierte Gewebeschnitt mit einem Eindeckmedium, wie etwa PH-gepuffertem Glycerin, beschichtet und mit einem Deckglas abgedeckt. Das Deckglas wird derart angeordnet, dass es sich zwar in einem sicheren Abstand zu der Oberfläche des Gewebeschnitts befindet, eine Betrachtung mit dem Mikroskop aber problemlos möglich ist.

Wie bereits angedeutet worden ist, besteht ein Ziel bei der Weiterentwicklung von Automaten zur Untersuchung von Patientenproben grundsätzlich darin, sämtliche Verfahrensschritte vom Eingang der Probe bis hin zur Erstellung eines Laborbefundes möglichst effizient zu gestalten und gleichzeitig mögliche Fehlerquellen weitgehend zu beseitigen. Ausgehend von diesem generellen Bestreben, die Laborarbeit effektiver und noch zuverlässiger zu machen, liegt der vorliegenden Erfindung die spezielle Aufgabe zugrunde, die aus dem Stand der Technik bekannten technischen Lösungen zur automatischen Mikroskopie biologischen Materials derart weiter zu bilden, dass eine Automatisierung der Mikroskopie eines Objektträgers mit darauf befindlichen Biochips, insbesondere mit Biochip-Mosaiken, auf vorteilhafte Weise möglich ist. Vor allem soll der Vorgang einer Fokussierung des auf dem und den Biochips angeordneten biologischen Materials mit verhältnismäßig einfachen Mitteln realisierbar sein und gleichzeitig zügig sowie mit hoher Qualität erfolgen. Die anzugebende technische Lösung soll einfach in die bekannten Systeme zur automatischen Mikroskopie biologischen Materials integrierbar sein und eine Unterstützung für das im Labor tätige Personal darstellen. Eine weitere der vorliegenden Erfindung zugrunde liegende Aufgabe besteht darin, die Anzahl der während der Fokussierung aufgenommenen und später für eine Bildauswertung nicht benötigten Aufnahmen zu minimieren.

Die vorstehende Aufgabe wird mit Hilfe eines Verfahrens nach Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Offenbart wird betrifft eine Vorrichtung zur automatisierten Untersuchung von biologischem Material mit einem Mikroskop, auf dessen Kreuztisch das biologische Material zwischen einem Objektträger oder einer Analyseplatte und wenigstens einer Abdeckung angeordnet ist, mit wenigstens einer Lichtquelle zur Belichtung des biologischen Materials sowie mit einer Bildaufnahmeeinheit, die wenigstens ein mit Hilfe des Objektivs des Mikroskops vergrößertes Bild des biologischen Materials aufnimmt und an eine Auswerteeinheit überträgt, wobei eine Kennzeichnung vorgesehen ist, die von einer Einrichtung zur automatischen Fokussierung des biologischen Materials erkennbar ist und die Fokussierung durch gezielte Bewegung des Kreuztisches unter Zugrundelegung der Erkennung der Kennzeichnung durchführbar ist, derart weitergebildet worden, dass das biologische Material auf einem durch Fragmentieren und Teilen eines Deckglases hergestellten Biochip angeordnet ist, der auf den Objektträger aufgebracht ist und dass sich die Kennzeichnung auf einer dem biologischen Material zugewandten Seite des Biochips befindet.

Mit der technischen Lösung wird sichergestellt, dass die Fokussierung des auf einem Biochip angeordneten biologischen Materials hochgenau und trotzdem vergleichsweise schnell erfolgt. Durch das Vorsehen einer Kennzeichnung auf dem Biochip, die vorzugsweise bereits vor der Unterteilung des eigentlichen Deckglases bei der Herstellung des Biochips auf das Deckglas aufgebracht wird, ist, wie im Folgenden noch eingehend erläutert wird, eine einfache und zuverlässige Fokussierung des biologischen Material möglich. Die in den Herstellungsprozess des Deckglases integrierte Aufbringung der Kennzeichnung bietet hierbei den Vorteil, dass die Kennzeichnung wesentlich einfacher auf das noch nicht fragmentierte Deckglas als auf die vergleichsweise kleinen Biochips aufzubringen ist.

Wesentlich für einen effektiven Fokussierungsvorgang ist, dass sich die Kennzeichnung auf der Oberfläche des Biochips befindet, die im Vergleich zur Oberfläche des biologischen Materials verhältnismäßig eben ist und so eine genaue Abstandsbestimmung ermöglicht. Hierbei ist es grundsätzlich möglich, die Kennzeichnung auf einer dem biologischen Material zugewandten Seite des Biochips oder auf einer dieser Seite abgewandten Rückseite des Biochips vorzusehen.

In einem ersten Schritt unmittelbar vor Beginn des Fokussierungsvorgangs erfolgt die Detektion der Kennzeichnung, insbesondere der Bestimmung des Abstandes zwischen Objektiv und Kennzeichnung. Auf der Grundlage der Bestimmun der Lage und/oder der Position der Kennzeichnung, insbesondere des Abstandes zwischen Kennzeichnung und Objektiv, wird ein Zielintervall festgelegt. Das Zielintervall weist hierbei einen maximalen und einen minimalen Abstand zum Objektiv auf, zwischen denen sich die Kennzeichnung und das auf der Oberfläche des Biochips angeordnete Material befinden. In einer speziellen Ausführungsform findet im Weiteren nach Festlegung des Zielintervalls eine Fokussierung des biologischen Materials innerhalb des Zielintervalls statt. Da die Suche nach dem Fokus auf diese Weise auf das Zielintervall beschränkt wird, kann der Fokussiervorgang erheblich verkürzt werden.

Die Fokussierung der Kennzeichnung findet bevorzugt in einem Durchlichtmodus statt, was unter anderem den Vorteil hat, dass das mit Fluoreszenzfarbstoffen markierte biologische Material nur kurzfristig im Bereich der Anregungswellenlänge beleuchtet wird und somit dem frühzeitigen Ausbleichen des Fluoreszenzfarbstoffes auf geeignete Weise entgegengewirkt werden kann.

Ebenso ist es allerdings grundsätzlich denkbar, die Fokussierung im Fluoreszenzmodus zu betreiben. Dies ermöglicht das erfindungsgemäße Fokussierverfahren vor allem dadurch, dass der für den Fokussiervorgang benötigte Zeitraum gegenüber bekannten Verfahren verkürzt ist. Alternativ oder in Ergänzung wird für die Detektion der Kennzeichnung eine Hilfsstrahlenquelle, wie etwa ein Laser verwendet. Der Strahl eines derart verwendeten Lasers wird vorzugsweise durch die Kennzeichnung reflektiert und von einer Empfangseinrichtung empfangen. Anhand der Auswertung des Strahlengangs und/oder der Laufzeit kann so ein Abstand zwischen der Kennzeichnung und dem Objektiv bestimmt werden. Dies ist deshalb möglich, weil sich die Hilfsstrahlenquelle, insbesondere der Laser, in einer definierten Position relativ zum Objektiv befindet.

Als Kennzeichnung, die von der Einrichtung zur Fokussierung erkannt wird, ist ein beliebiges Muster verwendbar. Auf vorteilhafte Weise eignen sich Gitterlinien, die zumindest in einer Erstreckungsrichtung einen äquidistanten Abstand aufweisen. Derartige Gitterlinien werden auf das Deckglas bzw. den Biochip aufgebracht, bevor das biologische Material, bei dem es sich vorzugsweise um den Gefrierschnitt eines Gewebes handelt, auf den Biochip aufgebracht wird. Die Kennzeichnung wird hierbei derart ausgeführt, dass eine Beeinflussung zwischen Kennzeichnung und auf dem Biochip aufgebrachtem biologischen Material weitgehend ausgeschlossen werden kann.

Eine spezielle Weiterbildung sieht vor, dass als Kennzeichnung des Biochips wenigsten drei Konturen vorgesehen sind, deren Mittelpunkte äquidistant beabstandet sind. Derartige Konturen werden von der Einrichtung zur Fokussierung erkannt, so dass das Objektiv des Mikroskops nach erfolgter Fokussierung auf die Oberfläche des Biochips bzw. das dort befindliche biologische Material scharf gestellt werden kann. In jedem Fall wird mit Hilfe einer erfindungsgemäß auf dem Biochip vorgesehenen Kennzeichnung sichergestellt, dass die Lage und / oder die Position des Biochips, insbesondere der Abstand der Biochip-Oberfläche vom Mikroskopobjektiv zuverlässig erkannt wird. Die auf der Biochipoberfläche vorgesehenen Konturen werden vorzugsweise als Kreise ausgeführt, deren Mittelpunkte äquidistant voneinander beabstandet sind. In diesem Zusammenhang ist es denkbar, dass eine derartige Kennzeichnung mit Hilfe einer geeigneten Vorrichtung in der gewünschten Form auf die Oberfläche des Biochips vor oder nach der Fragmentierung des Deckglases aufgebracht wird. Ebenso ist es allerdings denkbar, die Oberfläche zumindest teilweise flächig zu beschichten und zur Erzeugung der gewünschten Kennzeichnung entsprechende Schablonen vorzusehen oder aber im Anschluss an die flächige Beschichtung entsprechende Kennzeichnungskonturen, bspw. durch Ätzen, zu erzeugen.

In einer weiteren Ausführungsform ist vorgesehen, dass ein die Kennzeichnung umgebender Bereich festgelegt ist, indem keine Bilder von der Bildaufnahmeeinheit aufgenommen und / oder aufgenommene Bilder in der Auswerteinheit bei der Verarbeitung nicht verwendet oder verworfen bzw. gelöscht werden. Durch das Vorsehen eines entsprechenden Bereichs um die auf der Biochip-Oberfläche vorgesehenen Kennzeichnung wird gewährleistet, dass Gewebebereiche bzw. Zellen, die ggf. mit der Kennzeichnung reagieren, bei der Untersuchung des biologischen Materials bzw. der Befundung einer Patientenprobe nicht berücksichtigt werden.

Gemäß einer anderen Weiterbildung ist vorgesehen, dass die Kennzeichnung in Form einer flächigen Beschichtung der Biochip-Oberfläche ausgeführt ist. Auf vorteilhafte Weise werden hierbei insbesondere drei Bereiche des Biochips mit einer flächigen Kennzeichnung versehen. In einer ganz speziellen Weiterbildung wird die gesamte für die Kennzeichnung vorgesehene Oberfläche des Biochips mit einer entsprechenden flächigen Kennzeichnung versehen. Mittels einer ganz- oder teilflächigen Beschichtung der Oberfläche des Biochips wird dann ebenfalls aufgrund von Reflexion oder Transmission an der Schicht ein entsprechendes Signal im Distanzsensor erzeugt.

Auf vorteilhafte Weise eignen sich für die Erkennung während der Arbeit mit einem automatischen Mikroskop Kennzeichnungen, die Silizium aufweisen. Alternativ oder in Ergänzung hierzu ist es denkbar, dass die Kennzeichnung ein Metall, vorzugsweise Chrom aufweist. Ebenso sind dielektrisch Schichten denkbar, deren spektrale Reflexionseigenschaften für den Distanzsensor optimiert sind und die Bildanalyse nicht negativ beeinflussen. Sofern zur Kennzeichnung auf der Biochip-Oberfläche ein Metall oder ein Dielektrikum verwendet wird, ist es denkbar, dieses auf die Oberfläche aufzudampfen oder aufzusputtern. In Bezug auf die Herstellung eines entsprechend gekennzeichneten Biochips hat dies den Vorteil, dass das Aufdampfen von Metall zuverlässig erfolgt und verhältnismäßig kostengünstig auszuführen ist. In einer speziellen Ausführungsform können auch hier spezielle Konturen aus dem vollflächig bedampften Oberflächenbereich durch Ätzen herausgearbeitet werden.

Gemäß einer weiteren Ausführungsform ist es denkbar, dass die Einrichtung zur automatischen Fokussierung des biologischen Materials wenigstens eine Laser-Lichtquelle oder eine polychromatische Strahlungsquelle und einen Detektor aufweist, der das von der Kennzeichnung reflektierte Licht zumindest teilweise empfängt und auf der Grundlage des empfangenen Lichts ein Signal generiert, das ausgewertet und unter Berücksichtigung des ausgewerteten Signals die gezielte Bewegung des Kreuztischs zur Fokussierung des biologischen Materials erfolgt. Bei Verwendung einer Laser-Lichtquelle sowie eines Detektors bietet es sich auf vorteilhafte Weise an, die Oberfläche des Biochips zumindest teilweise mit einem Metall, wie etwa Chrom, zu beschichten und so die Laserstrahlen zu reflektieren. Mit Hilfe der beschriebenen Laser-Lichtquelle des Detektors ist es auf bevorzugte Weise möglich, die Lage und / oder Position der Oberfläche des Biochips, auf der das biologische Material angeordnet ist, zu bestimmen.

Die Erfindung zeichnet sich durch ein Verfahren zur automatischen Untersuchung von biologischem Material aus. Das erfindungsgemäße Verfahren mit einem Mikroskop, auf dessen Kreuztisch das biologische Material zwischen einem Objektträger oder einer Analyseplatte und wenigstens einer Abdeckung angeordnet ist, bei dem das biologische Material belichtet wird, bei dem mit einer Bildaufnahmeeinheit wenigstens ein mit Hilfe des Objektiv des Mikroskops vergrößertes Bild des biologischen Materials aufgenommen und an eine Auswerteinheit übertragen wird und bei dem mit einer Einrichtung zur automatischen Fokussierung des biologischen Materials eine Kennzeichnung detektiert, eine Position und / oder Lage der Kennzeichnung bestimmt und auf der Grundlage der detektierten Position und / oder der Lage der Kennzeichnung eine Fokussierung des biologischen Materials durch gezielte Bewegung des Kreuztisches durchgeführt wird, ist derart weitergebildet worden, dass das biologische Material auf einem durch Fragmentieren und Teilen eines Deckglases hergestellten Biochip, der auf den Objektträger aufgebracht ist, bereitgestellt wird und dass die Kennzeichnung auf einer Oberfläche des Biochips detektiert wird. Erfindungsgemäß wird auf der Grundlage einer Bestimmung einer Lage und/oder einer Position der Kennzeichnung ein Zielintervall festgelegt. Das Zielintervall weist einen maximalen und einen minimalen Abstand zum Objektiv auf. Ferner wird erfindungsgemäß eine Fokussierung des biologischen Materials auf dem Biochip vorgenommen, indem innerhalb des Zielintervalls in wenigstens zwei unterschiedlichen Ebenen Bilder aufgenommen und diese ausgewertet werden.

Das erfindungsgemäße Verfahren sieht vor, dass auf der Grundlage der detektierten Position und / oder Lage der Kennzeichnung ein Zielintervall bestimmt wird, innerhalb dem der Kreuztisch während der Fokussierung verfahren wird. Durch das Vorsehen eines Zielintervalls in Abhängigkeit der detektierten Lage und / oder Position der das biologische Material tragenden Biochip-Oberfläche kann auf bevorzugte Weise ein Intervall festgelegt werden, das einen Bereich oberhalb und unterhalb der Biochip-Oberfläche einschließt. Während des Fokussiervorgangs wird der Kreuztisch derart verfahren, dass die Fokussierebene zwischen den Intervallgrenzen bewegt wird. Auf bevorzugte Weise wird somit der Verfahrweg des Kreuztisches während der Fokussierung auf einen geeigneten Wert begrenzt.

Auf der Grundlage der detektierten Position und / oder Lage der Kennzeichnung wird der Kreuztisch so aus wenigstens einer ersten Position, in der das Objektiv einen ersten Abstand vom biologischen Material aufweist, in eine zweite Position, in der das Objektiv einen zweiten Abstand vom biologischen Material aufweist, verfahren und weiterhin in zwei unterschiedlichen Ebenen zwischen der ersten und der zweiten Position jeweils wenigstens ein Bild des biologischen Materials aufgenommen und an die Auswerteinheit übertragen. In diesem Zusammenhang ist es leicht vorstellbar, dass bei der Aufnahme wenigstens zweier Bilder in unterschiedlichen Ebenen diese über eine unterschiedliche Schärfe verfügen. Durch Auswertung der innerhalb des Zielintervalls in wenigstens zwei verschiedenen Ebenen aufgenommenen Bilder mit bekannten Bilddatenauswerteverfahren, kann auf bevorzugte Weise schließlich das Bild bestimmt werden, das am schärfsten ist. Über die Auswahl des schärfsten Bildes wird wiederum die Fokusebene bestimmt.

Mit dem beschriebenen Verfahren ist es somit auf vorteilhafte Weise möglich, auf der Grundlage eines Vergleichs der aufgenommenen Bilder in der Auswerteinheit eine Fokusebene zu bestimmten. Diejenigen Bilder, die aufgenommen wurden und gleichfalls innerhalb der Fokusebene liegen, werden schließlich an eine Einrichtung zur Befunderstellung übertragen. Vorzugsweise handelt es sich hierbei um eine Datenverarbeitungseinheit, insbesondere einen Computer, auf dem eine Laborsoftware installiert ist. Mit Hilfe der Laborsoftware werden die für eine spezielle Patientenprobe aufgenommenen Bilder einem Patientendatensatz zugeordnet und entsprechend abgelegt. Einem Arzt, der für die Erstellung eines Befundes zuständig ist, ist es auf verhältnismäßig einfache Weise möglich, sämtliche Daten in Bezug auf die untersuchte Patientenprobe zügig sich auf einem Bildschirm anzeigen zulassen.

Im Folgenden wird die Erfindung anhand von Ausführungsbeispielen ohne Beschränkung des allgemeinen Erfindungsgedankens anhand von Figuren näher erläutert. Dabei zeigen:
- Fig. 1:: Objektträger mit Biochips;
- Fig. 2:: Schnittansicht des Reaktionsfeldes eines Objektträgers mit Biochip;
- Fig. 3:: Draufsicht auf einen Biochip mit Kennzeichnung;
- Fig. 4:: schematisierte Darstellung eines Mikroskops mit automatisierter Fokussierung;
- Fig. 5:: Frontansicht eines Mikroskops mit automatisierter Fokussierung;
- Fig. 6:: Seitenansicht eines Mikroskops mit automatisierter Fokussierung sowie
- Fig. 7:: Isometrische Ansicht eines Mikroskops mit automatisierter Fokussierung.

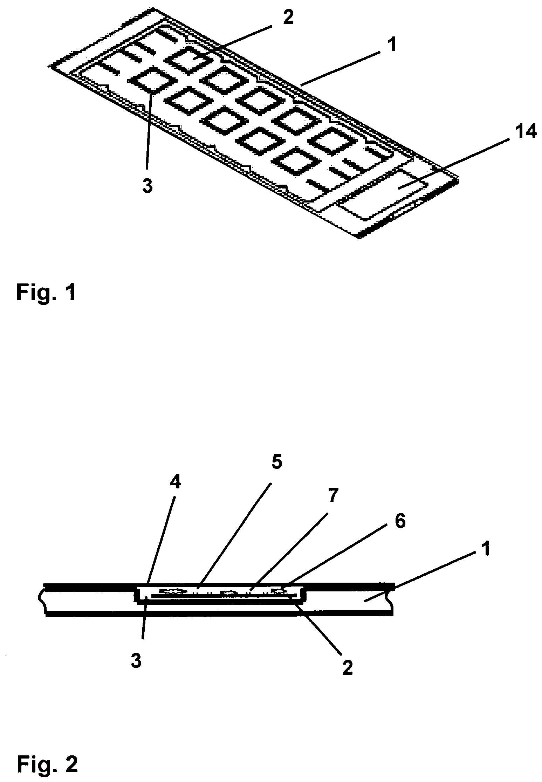

Figur 1 zeigt zunächst einen Objektträger 1 mit darauf angeordneten Biochips 2. Hierfür verfügt der Objektträger 1 über zehn Reaktionsfelder 3, die gegenüber der übrigen Oberfläche des Objektträgers 1 als kleine Vertiefungen ausgeführt sind. Auf den Reaktionsfeldern 3 sind die Biochips 2 angeordnet. Grundsätzlich ist es denkbar, auf einem Reaktionsfeld 3 einen oder auch mehrere Biochips 2 vorzusehen. In diesem Zusammenhang ist es selbstverständlich möglich, die Größe der Reaktionsfelder 3 auf geeignete Weise anzupassen.

Bei den Biochips 2 handelt es sich um kleine Träger mit biologischem Material, die durch Beschichten eines Standarddeckglases mit einem Gewebeschnitt und anschließendem Fragmentieren des Deckglases hergestellt worden sind. Während es sich bei einem Standarddeckglas um ein etwa 100 µm bis 200 µm dünnes, rechteckiges oder rundes Glasplättchen handelt, das vielfach eine Fläche von 18 x 18 mm² aufweist, sind Biochips 2 mit geeignetem biologischem Material beschichtete Deckglas-Fragmente, die somit eine vielfach kleinere Oberfläche aufweisen. In Abhängigkeit des jeweiligen Untersuchungsprofils sowie des Kundenwunsches können auf einem Objektträger 1 eine Mehrzahl von Reaktionsfeldern 3 für entsprechende Biochips 2 vorgesehen werden. Hierbei ist es ebenfalls denkbar, auf einem Reaktionsfeld 3 wiederum mehr als einen Biochip mit unterschiedlichen Geweben vorzusehen.

Während einer Untersuchung im Labor werden die auf den Reaktionsfeldern 3 des Objektträgers 1 angeordneten und mit Gewebe beschichteten Gewebeschnitte mit unterschiedlichen Fluiden, insbesondere einer Patientenprobe inkubiert. Nach Abschluss der Inkubation und vor dem Mikroskopieren wird der inkubierte Gewebeschnitt mit einem pH-gepufferten Glycerin als Eindeckmedium beschichtet und mit einem Deckglas 4 abgedeckt. Das Deckglas 4 wird derart angeordnet, dass es sich zwar in einem sicheren Abstand zu der Oberfläche des Gewebeschnitts befindet, eine Betrachtung mit dem Mikroskop aber problemlos möglich ist.

Figur 2 zeigt in einer stark vergrößerten Schnittansicht ein Reaktionsfeld 3 eines Objektträgers 1. Auf dem Reaktionsfeld 3 des Objektträgers 1 befindet sich ein mit einem Teil eines Gewebeschnitts 6 beschichteter Biochip 2. Der Gewebeschnitt ist mit einem Eindeckmedium 5 beschichtet und durch ein Deckglas 4 abgedeckt. Auf der dem Mikroskop zugewandten Seite verfügt die den Gewebeschnitt 6 tragende Oberfläche des Biochips 2 über eine Kennzeichnung 7 in Form von Linien.

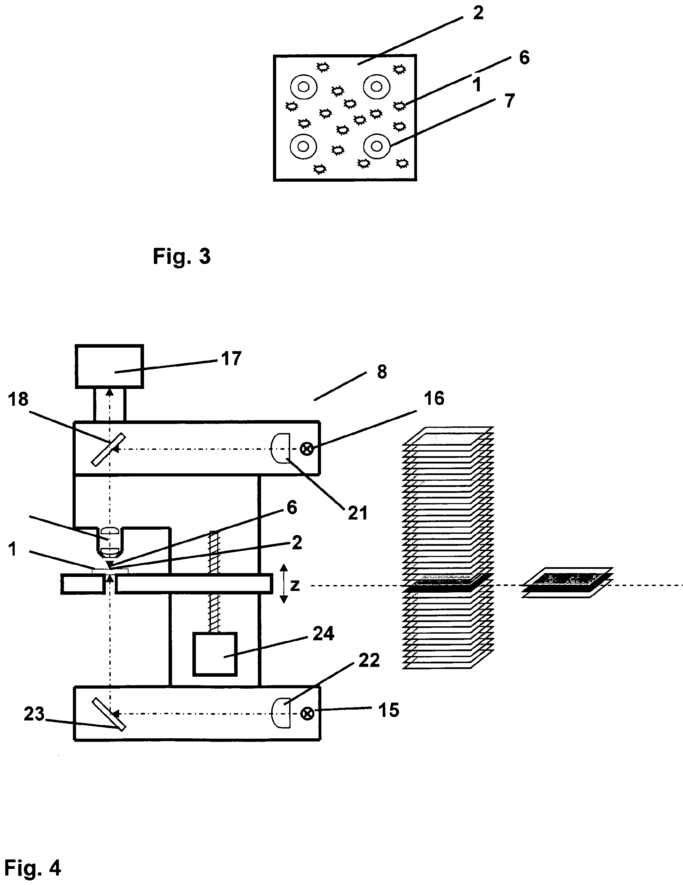

In Ergänzung hierzu ist in Figur 3 der auf dem Reaktionsfeld 3 des Objektträgers angeordnete Biochip 2 in einer Draufsicht dargestellt. Die als Kennzeichnung 7 verwendeten Linien sind nach Art von Gruppen mit mehreren konzentrischen Kreisen auf der Oberfläche angeordnet. Während des Mikroskopierens wird die Kennzeichnung 7 mit Hilfe einer Vorrichtung zur automatischen Fokussierung des auf dem Biochip befindlichen biologischen Materials 6 erkannt und die Fokussierung durchgeführt. Optional wird die Ausdehnung der Kennzeichnung 7 in Z-Richtung während des Fokussiervorgangs berücksichtigt, um eine Optimierung der Fokussierung zu erreichen. Die auf dem Biochip 2 vorgesehene Kennzeichnung dient somit der Detektion der Fokusebene. Wesentlich an der Kennzeichnung 7 ist, dass diese mit dem auf dem Biochip 2 befindlichen biologischen Material 6 nicht reagiert.

Alternativ zu der in Figur 3 dargestellten Ausführung der Kennzeichnung 7 in Form von Gruppen konzentrischer Kreise ist es denkbar, parallele Linien oder ein Gittermuster auf die Oberfläche des Biochips 2 aufzubringen. Ebenso sind flächige Kennzeichnungen 7 insbesondere mit einem Metall oder Dielektrikum, möglich.

Ferner kann eine erfindungsgemäß vorgesehene Kennzeichnung 7 entweder auf der Oberseite des Biochips 2, also auf der dem darauf befindlichen Gewebe 6 zugewandten Seite, oder auf der Rückseite, also der dem Objektträger 1 zugewandten Oberfläche, vorgesehen sein. Wesentlich ist jeweils, dass die Kennzeichnung 7 von der Vorrichtung zur automatischen Fokussierung des auf dem Biochip 2 befindlichen biologischen Materials 6 zuverlässig erkennbar ist. Je nach Ausführung und Anordnung der Kennzeichnung 7 wird weiterhin die Ausdehnung der Kennzeichnung 7 in Z-Richtung und/oder die Stärke des Biochips 2, der das Gewebe trägt, bei der Ermittlung der Fokusebene berücksichtigt.

Zur Untersuchung einer Patientenprobe ist ein mit einer Vielzahl von mit einem Deckglas 4 abgedeckten Biochips 2 bestückter Objektträger 1 gemäß Figur 1 vorgesehen. Auf den verschiedenen Biochips 2 befindet sich hierbei unterschiedliches Gewebe 6 bzw. biologisches Material. Der Objektträger 1 mit den Biochips 2 wird auf dem Kreuztisch 9 eines Mikroskops 8 platziert und arretiert. In diesem Zusammenhang ist es denkbar, dass der Objektträger 1 manuell oder mit Hilfe einer Handhabungsvorrichtung 13 auf dem Kreuztisch 9 positioniert wird. Insbesondere bei Mikroskopen 8, die in einem zumindest teilautomatisierten Labor betrieben werden, werden die inkubierten Objektträger 1 mit den Biochips 2 in geeigneten Objektträgerboxen 12 bevorratet und zwischen diesen und dem Kreuztisch 9 mit Hilfe einer Handhabungsvorrichtung 13 automatisiert bewegt. Eine geeignete Handhabungsvorrichtung 13 weist bevorzugt einen Greifer auf, wobei der Greifer entweder relativ zum Kreuztisch 9 oder gemeinsam mit dem Kreuztisch bewegbar ist.

In jedem Fall verfügen die Objektträger 1 über Markierungen 14 in Form einer Aufschrift oder eines Codes, die eine genaue Identifikation der auf den Biochips 2 befindlichen Patientenprobe sowie vorzugsweise auch der auf den Biochips 2 befindlichen Gewebearten ermöglichen.

Figur 4 zeigt die schematische Darstellung eines Fluoreszenzmikroskops 8 mit einer Durchlichteinrichtung, einem vertikal verfahrbaren Kreuztisch 9 und einer Digitalkamera 17 zur Bildaufnahme. Ferner ist eine Anregungslichteinrichtung mit einem dichromatischen Strahlteiler 18 und einer Anregungslichtquelle 16 vorgesehen. Der Strahlteiler 18 reflektiert das von der Anregungslichtquelle 16 emittierte Anregungslicht in Richtung auf das auf dem Biochip 2 angeordnete biologische Material 6. Im Gegensatz hierzu wird das von der Durchlichtquelle 15 emittierte und durch einen Umlenkspiegel 23 umgeleitete Durchlicht aus Richtung des Biochips 2 mit dem biologischen Material 6 durchgelassen. Der dichromatische Strahlteiler 18 ist vorzugsweise als Reflexionspassfilter ausgeführt und reflektiert alle Wellenlängen unterhalb von 510 nm. Vereinfacht ausgedrückt wirkt der dichromatische Strahlteiler 18 somit für das Anregungslicht als Umlenkspiegel, während das Licht mit der Wellenlänge der Fluoreszenz den Strahlteiler 18 ungehindert passiert. In Ergänzung zum Strahlteiler bzw. zum Reflexionspassfilter 18, der das Anregungslicht vollständig reflektiert, ist vorzugsweise noch ein Langpasssperrfilter 19 vorgesehen, der Licht mit Wellenlängen unterhalb von 510 nm herausfiltert.

In dem hier beschriebenen Ausführungsbeispiel wird der Fluoreszenzfarbstoff Fluorescein eingesetzt, dessen Absorptionsmaximum bei 485 nm liegt und dessen Emissionsmaximum 514 nm beträgt. Ein wesentlicher Aspekt der beschriebenen Technologie ist darin zu sehen, dass die in Richtung des Strahlengangs hinter dem Langpasssperrfilter 19 angeordnete Digitalkamera 17 sowohl Bilder in der Fluoreszenz als auch Bilder im Durchlicht aufnehmen muss. Aus diesem Grund ist die Durchlichtquelle 15 als LED mit einer Wellenlänge von 520 bis 535 nm ausgeführt. Licht dieser Wellenlänge passiert sowohl den Strahlteiler 18 als auch den Sperrfilter 19.

Für den Fokussiervorgang erzeugt die Durchlichteinrichtung mit Hilfe der Durchlichtquelle 15 Licht mit der Wellenlänge im Bereich der Emissionswellenlänge des verwendeten Fluoreszenzfarbstoffes. Hierbei wird das von der Durchlichtquelle 15 emittierte Licht durch eine geeignete Optik 22 fokussiert und anschließend durch den Umlenkspeiegel 23 vertikal nach oben umgelenkt, um von unten durch den Biochip 2 mit dem darauf befindlichen biologischen Material 6 zu strahlen.

Bei dem verwendeten, auf den Biochip 2 aufgebrachten Material 6 handelt es sich beispielsweise um kultivierte humane Epithelzellen, an denen Antikörper gegen Zellkerne gebunden sind, die mit Fluorescin-markierten Anti-Human-Antikörpern angefärbt wurden. Da das Absorptionsmaximum, also sie Anregungswellenlänge des Fluoresceins, bei 485 nm liegt, wird der Farbstoff durch das Durchlicht nicht zur Fluoreszenz angeregt.

Wie der Figur 4 ferner zu entnehmen ist, wird das von der Durchlichtquelle 15 in horizontaler Richtung emittierte Durchlicht zunächst durch die Optik 22 gebündelt und danach durch den Umlenkspiegel 23 in vertikaler Richtung abgelenkt. Das Durchlicht passiert den auf dem Kreuztisch 9 angeordneten Biochip 2 mit biologischem Material 6, wird durch das Objektiv 20 des Mikroskops 8 gebündelt und passiert, ungehindert den dichromatischen Strahlteiler 18 sowie den Langpasssperrfilter 19, um dann zum Sensor der Digitalkamera 17 zu gelangen. Die Digitalkamera 17 erzeugt das mit dem Durchlicht erzeugte Bild der Zellwände des biologischen Materials 6 mit einer relativ kurzen Belichtungszeit von etwa 10 ms.

Um die Anzahl der für die Fokussierung im Durchlichtmodus benötigten, in verschiedenen senkrecht zur z-Achse liegenden Ebenen aufgenommenen Bilder zu minimieren, verfügt der Biochip 2 auf seiner Oberfläche über eine Kennzeichnung 7 und das Mikroskop 8 über eine Einrichtung zur Erkennung dieser Kennzeichnung. Vor dem Start des Fokussiervorgangs im Durchlichtmodus wird nunmehr zunächst der Abstand der Kennzeichnung 7 vom Objektiv 20 und/oder deren Lage relativ zum Objektiv 20 ermittelt. Hierzu ist eine Licht- bzw. Strahlenquelle vorgesehen, die Licht emittiert, das schließlich von der Kennzeichnung 7 reflektiert und von einem geeigneten Sensor detektiert wird. Unter Berücksichtigung der Laufzeit und/oder des Strahlengangs wird der Abstand der Kennzeichnung 7 vom Objektiv 20 und/oder deren Lage relativ zum Objektiv 20 ermittelt. Optional wird bei der vorgenannten Ermittlung des Abstands und/oder der Lage auch die Dicke der Kennzeichnung 7, also deren Erstreckung in z-Richtung, berücksichtigt. Unter Berücksichtigung des ermittelten Abstands der Kennzeichnung 7 vom Objektiv wird der Kreuztisch 9 mit Hilfe eines Motors 24 derart in z-Richtung verfahren, dass die Fokussierung im Durchlichtmodus lediglich innerhalb eines bestimmten Zielbereiches durchgeführt wird. Innerhalb dieses Zielbereiches, der ein Abstandsintervall von wenigen Mikrometern in z-Richtung darstellt, werden im Durchlichtmodus wenige, vorzugsweise drei Bilder in unterschiedlichen Ebenen aufgenommen. Im Anschluss hieran oder zumindest teilweise zeitgleich werden durch eine angeschlossene Datenverarbeitungsanlage (nicht dargestellt) mit Hilfe des bekannten Sum-Modulus-Difference-Verfahrens (SMD) Werte für die jeweilige Schärfe jedes einzelnen Bildes ermittelt. Das Bild, bei dem dieser Wert maximal ist, wird als das schärfste Bild identifiziert und die zugehörige vertikale Position (in z-Richtung) des Kreuztisches wird als Fokusebene festgelegt.

Unabhängig von der Art und Ausführung der Kennzeichnung auf dem Biochip werden vorzugsweise Bereiche der Bilder, die das Nahfeld der Kennzeichnung abbilden, bei der Ermittlung der Fokusebene nicht berücksichtigt. Dies geschieht um sicher zu gehen, dass Teile des auf dem Biochip 2 befindlichen biologischen Materials 6, die einer Beeinflussung durch die Kennzeichnung unterliegen könnten, bei der Auswertung nicht berücksichtigt werden.

Nachdem die Durchlichtquelle 15 abgeschaltet wurde, wird der Kreuztisch 9 zu der im Durchlicht ermittelten Fokusebene bewegt. Um ein Fluoreszenzbild zu erzeugen, wird daraufhin die als LED ausgeführte Anregungslichtquelle 16 eingeschaltet. Das emittierte Licht wird durch eine geeignete Optik 21 fokussiert und trifft auf den bereits beschriebenen dichromatischen Strahlteiler 18, der das Anregungslicht nach unten reflektiert und so durch das Objektiv 16 auf das biologische Material 6 auf dem Biochip 2 lenkt. Dort trifft das Anregungslicht auf den Fluoreszenzfarbstoff, der aufgrund dieser Anregung diffuses Licht mit der Hauptwellenlänge 514 nm emittiert. Ein geringer Teil dieser Fluoreszenzstrahlung wird senkrecht nach oben gerichtet abgestrahlt, durchläuft das Objektiv 16 und passiert den dichromatischen Strahlteiler 18 sowie den Langpasssperrfilter 19, um von der Digitalkamera 17 aufgenommen zu werden.

Aufgrund einer langen Belichtungszeit von etwa 500 ms erzeugt die Kamera 17 ein Fluoreszenzbild. Da der Ort der Fluoreszenz innerhalb der Höhe des biologischen Materials 6 variiert, kann die Fokusebene in der Fluoreszenz gegenüber der im Durchlicht aufgefundenen Fokusebene abweichen. Um die exakte Fokusebene zu bestimmen, werden nunmehr auch in einem nur wenige Mikrometer großen Suchbereich einige Fluoreszenzbilder aufgenommen. Ebenso wie im Durchlicht wird dabei für jedes Bild die Kreuztischposition in vertikaler Richtung (z-Richtung) motorisch verändert. Mit Hilfe des Sum-Modulus-Difference-Verfahrens (SMD) wird das schärfste Fluoreszenzbild ermittelt.

Aufgrund der zunächst vorgenommenen Fokussierung im Durchlicht, ist der Bereich, in dem in der Fluoreszenz die Fokusebene ermittelt werden muss, vergleichsweise klein. Auf diese Weise können die Zeiten, in der der Fluoreszenzfarbstoff zum Emittieren von Strahlung angeregt und daher zumindest teilweise verbraucht wird, minimiert werden. Hinzu kommt, dass die Belichtungszeiten im Durchlicht erheblich kürzer als in der Fluoreszenz sind. Um eine weitere Reduzierung der für die Autofokussierung benötigten Zeit zu erreichen, wird mit Hilfe der auf den Biochips vorgesehenen Kennzeichnung 7 sicher gestellt, dass lediglich wenige, vorzugsweise 3 Bilder im Durchlicht aufgenommen werden müssen. Ohne das Vorsehen einer entsprechenden Kennzeichnung werden während der Fokussierung üblicherweise etwa 100 Bilder im Durchlicht aufgenommen. Die Dauer der Durchlichtfokussierung vermindert sich somit unter Berücksichtigung der jeweiligen Belichtungszeit von 100 x 10 ms = 1 s auf 3 x 10 ms = 30 ms.

Würde man den gesamten Autofokussierungsvorgang im Fluoreszenzlicht durchführen, würde sich die Dauer der Fokussierung sogar auf etwa 200 x 500 ms = 100 s erhöhen. Selbst dann, wenn aufgrund der langen Belichtungszeit in der Fluoreszenz die Berechnungen zur Bildschärfe (SMD) parallel zur Bildaufnahme ablaufen können und daher die Bildaufnahme abgebrochen werden kann sobald das schärfste Bild gefunden worden ist, wäre im Mittel immer noch eine aufsummierte Belichtungszeit von etwa 50 s erforderlich.

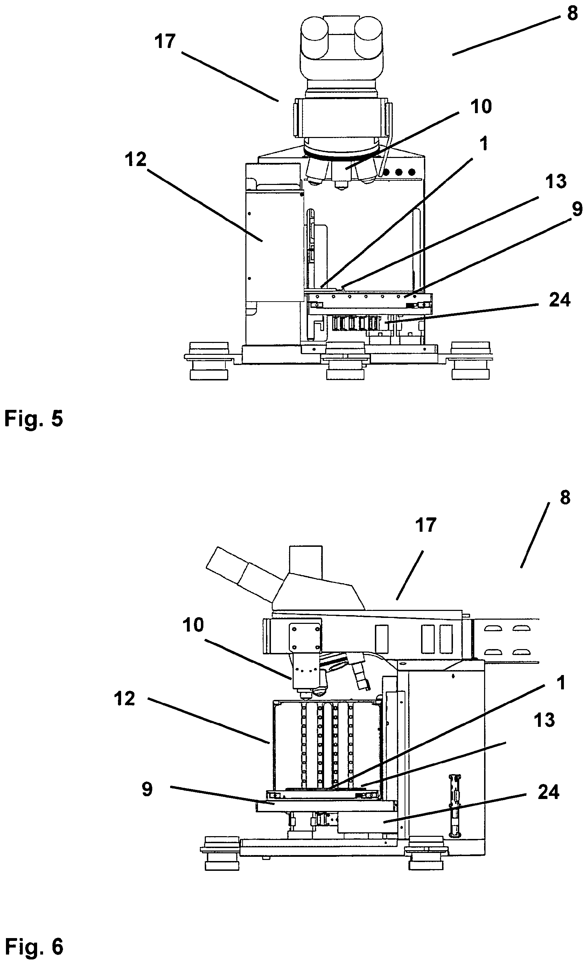

Die Figuren 5, 6 und 7 zeigen jeweils ein Fluoreszenzmikroskop 8 zur automatisierten Untersuchung biologischer Proben 6. Gleiche Bauteile sind wiederum mit denselben Bezugszeichen versehen. Das dargestellte Mikroskop 8 verfügt über eine Einrichtung zur automatischen Fokussierung des biologischen Materials 6, die derart ausgeführt ist, dass sie eine Kennzeichnung 7, die auf den auf Objektträgern 1 angeordneten Biochips 2 vorgesehen ist, erkennt und auf der Grundlage dieser Erkennung in z-Richtung einen Zielbereich festlegt, innerhalb dem die Fokusebene liegt. Zur exakten Festlegung der Fokusebene sind nur noch wenige Bildaufnahmen erforderlich, so dass die automatische Fokussierung im Vergleich zu bekannten Systemen erheblich beschleunigt werden kann.

Das Fluoreszenzmikroskop 8 verfügt über eine Aufnahme, an der eine der Aufbewahrung und Bereitstellung mehrerer Objektträger 1 dienende Objektträgerbox 12 befestigbar ist. Mit Hilfe einer Handhabungsvorrichtung 13, die als ein am Kreuztisch 9 befestigter Greifer ausgeführt ist, können die für eine Untersuchung benötigten Objektträger 1 gezielt der Objektträgerbox 12 entnommen und anschließend wieder in dieser abgelegt werden. Sowohl die Objektträgerbox 12 als auch die einzelnen Objektträger 1 verfügen über eine Markierung in Form einer Aufschrift oder eines Codes, um jeweils eine eindeutige Identifizierung zu gewährleisten. Gesteuert wird die Bereitstellung, Prozessierung und Untersuchung der Proben mit Hilfe einer Laborsoftware, über die auch die Untersuchungsergebnisse abgespeichert und ausgegeben werden.

Zur Vorbereitung des Mikroskopiervorgangs wird ein sogenannter Carrier 25, in dem die benötigten Objektträger 1 gehalten werden, der Objektträgerbox 12 entnommen und mit Hilfe der Handhabungsvorrichtung 13 in der gewünschten Position auf dem Kreuztisch 9 arretiert.

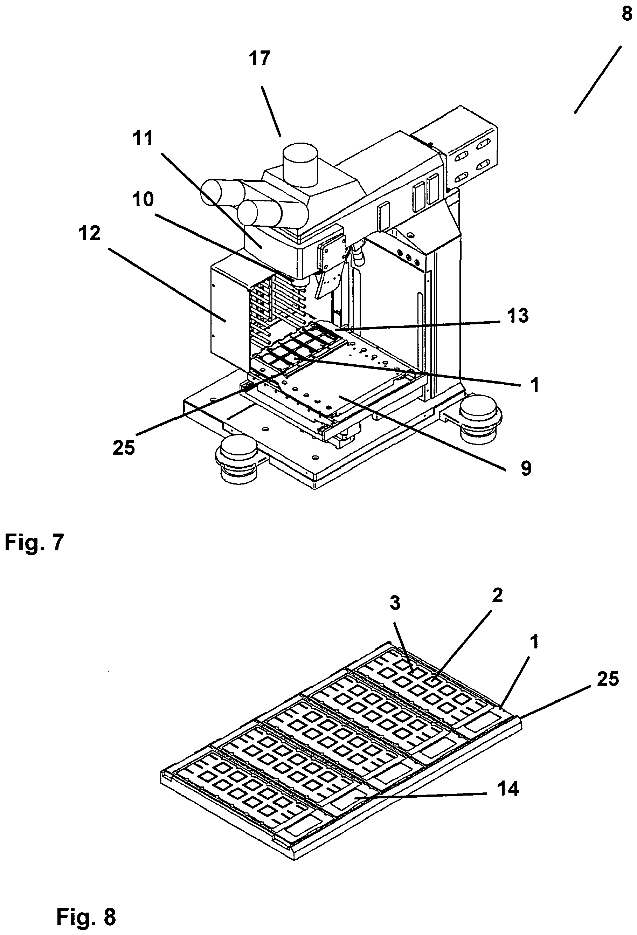

Die Gestaltung eines Carriers 25 ist beispielhaft der Figur 8 zu entnehmen. Der gezeigte Carrier 25 ist rahmenförmig ausgeführt und verfügt über fünf Aufnahmen für Objektträger 1. Die Objektträger 1 mit den darauf auf jeweils zehn Reaktionsfeldern 3 angeordneten Biochips 2 werden durch den Carrier 25 sicher gehalten und können auf diese Weise zuverlässig gelagert und transportiert werden.

Nach Entnahme eines Carriers 25 aus der Objektträgerbox 12 durch die Handhabungsvorrichtung 12 in Form eines Greifers erfolgt die Positionierung derart, dass sich letztendlich der für die Untersuchung vorgesehene Biochip 2 unterhalb des Objektivs 10 des Mikroskops befindet. Oberhalb des Objektivs 16 befindet sich die Digitalkamera 17, mit der die benötigten Bilder aufgenommen werden. Die Anordnung der Durchlicht- sowie der Anregungslichtquelle 15, 16 sowie der übrigen optischen Bauteile entspricht der, die im Zusammenhang mit der Beschreibung der Figur 4 erläutert worden ist.

Der bereits beschriebene Autofokussiervorgang einschließlich der Detektion der Kennzeichnung 7 auf den Biochips sowie der Aufnahme von Bildern in unterschiedlichen Ebenen findet zunächst in einem mittleren Bereich des jeweils untersuchten Biochips statt. Im Anschluss hieran werden noch in zwei weiteren Bereichen des Biochips 2, die sich links bzw. rechts der Mitte befinden, weitere Fokussierungen und damit verbundene Bildaufnahmen vorgenommen. Hierzu wird der Kreuztisch 9 jeweils in horizontaler Richtung verfahren.

Wesentlich ist jeweils, dass bei der Fokussierung zunächst die Kennzeichnung 7 auf den Biochips 2 detektiert wird, um so den horizontalen Bereich, in dem die Fokusebene zu erwarten ist, auf sinnvolle Weise einzuschränken und den automatisierten Fokussiervorgang in Bezug auf die benötigte Zeit zu optimieren.

### Bezugszeichenliste

- 1: Objektträger
- 2: Biochip
- 3: Reaktionsfeld
- 4: Deckglas
- 5: Eindeckmedium
- 6: biologisches Material
- 7: Kennzeichnung
- 8: Mikroskop
- 9: Kreuztisch
- 10: Objektiv
- 11: Vorrichtung zur automatisierten Fokussierung
- 12: Objektträgerbox
- 13: Handhabungsvorrichtung
- 14: Markierung
- 15: Durchlichtquelle
- 16: Anregungslichtquelle
- 17: Digitalkamera
- 18: dichromatischer Strahlteiler
- 19: Langpasssperrfilter
- 20: Objektiv
- 21: Optik der Anregungslichtquelle
- 22: Optik der Durchlichtquelle
- 23: Umlenkspiegel
- 24: Motor
- 25: Carrier

## Patentansprüche

1. Verfahren zur automatisierten Untersuchung von biologischem Material (6) mit einem Mikroskop (8), auf dessen Kreuztisch (9) das biologische Material (6) zwischen einem Objektträger (1) oder einer Analyseplatte und wenigstens einer Abdeckung (4) angeordnet ist, beim dem das biologische Material (6) belichtet wird, bei dem mit einer Bildaufnahmeeinheit (17) wenigstens ein mit Hilfe des Objektivs (10) des Mikroskops (8) vergrößertes Bild des biologischen Materials (6) aufgenommen und an eine Auswerteeinheit übertragen wird, und bei dem mit einer Einrichtung zur automatischen Fokussierung (11) des biologischen Materials (6) eine Kennzeichnung (7) detektiert, eine Position und/oder Lage der Kennzeichnung (7) bestimmt und auf der Grundlage der detektierten Position und/oder der Lage der Kennzeichnung (7) eine Fokussierung des biologischen Materials (6) durch gezielte Bewegung des Kreuztisches durchgeführt wird,
**dadurch gekennzeichnet, dass** das biologische Material (6) auf einem durch Fragmentieren und Teilen eines Deckglases hergestellten Biochip (2), auf dem das biologische Material (6) angeordnet ist, bereitgestellt wird, und dass die Kennzeichnung (7) auf einer Oberfläche des Biochips (2) detektiert wird,
- wobei auf der Grundlage einer Bestimmung einer Lage und/oder einer Position der Kennzeichnung ein Zielintervall festgelegt wird,
- wobei das Zielintervall einen maximalen und einen minimalen Abstand zum Objektiv aufweist
- und wobei eine Fokussierung des biologischen Materials auf dem Biochip vorgenommen wird, indem innerhalb des Zielintervalls in wenigstens zwei unterschiedlichen Ebenen Bilder aufgenommen und diese ausgewertet werden.

2. Verfahren nach Anspruch 1,
**dadurch gekennzeichnet, dass** auf der Grundlage der detektierten Position und/oder Lage der Kennzeichnung (7) ein Zielbereich bestimmt wird, innerhalb dem der Kreuztisch (9) während der Fokussierung verfahren wird.

3. Verfahren nach Anspruch 1 oder 2,
**dadurch gekennzeichnet, dass** auf der Grundlage der detektierten Position und/oder Lage der Kennzeichnung (7) der Kreuztisch (9) wenigstens aus einer ersten Position, in der das Objektiv (10) einen ersten Abstand vom biologischen Material (6) aufweist, in eine zweite Position, in der das Objektiv (10) einen zweiten Abstand vom biologischen Material (6) aufweist, verfahren wird, und in zwei unterschiedlichen Ebenen zwischen der ersten und der zweiten Position jeweils wenigstens ein Bild des biologischen Materials (6) aufgenommen und an die Auswerteeinheit übertragen wird.

4. Verfahren nach einem der Ansprüche 1 bis 3,
**dadurch gekennzeichnet, dass** zur Detektion der Kennzeichnung (7) und zur Belichtung des biologischen Materials (6) Licht unterschiedlicher Wellenlänge verwendet wird.

5. Verfahren nach einem der Ansprüche 1 bis 4,
**dadurch gekennzeichnet, dass** während der Fokussierung und während sich der Kreuztisch (9) innerhalb des Zielbereichs befindet das biologische Material (6) belichtet und in zwei unterschiedlichen Ebenen innerhalb des Zielbereichs jeweils wenigstens ein Bild des biologischen Materials (6) aufgenommen und an die Auswerteeinheit übertragen wird.

6. Verfahren nach einem der Ansprüche 1 bis 5,
**dadurch gekennzeichnet, dass** auf der Grundlage eines Vergleichs der aufgenommenen Bilder in der Auswerteeinheit eine Fokusebene bestimmt wird.

7. Verfahren nach Anspruch 6,
**dadurch gekennzeichnet, dass** in der Fokusebene liegende Bilder an eine Einrichtung zur Befunderstellung übertragen werden.

## Claims

1. Method for automated examination of biological material (6) with a microscope (8), on the cross table (9) of which said biological material (6) is arranged between an object slide (1) or an analysis plate and at least one cover (4), wherein said biological material (6) is exposed to light, wherein with an image recording unit (17) at least one image of said biological material (6) enlarged by means of the object lens (10) of said microscope (8) is recorded and transferred to an evaluation unit, and wherein using a device for automatic focusing (11) of said biological material (6) labeling (7) is detected, a position and/or location of said labeling (7) is determined and, based on said detected position and/or location of said labeling (7), focusing of said biological material (6) is undertaken by targeted movement of said cross table,
**characterized in that** said biological material (6) is provided on a biochip (2) manufactured by fragmentation and division of a cover slip, on which biochip (2) said biological material (6) is arranged, and said labeling (7) is detected on a surface of said biochip (2),
- wherein a target interval can be determined on the basis of determination of a location and/or a position of said labeling,
- wherein said target interval comprises a maximum and minimum distance to the object lens
- and wherein focusing of said biological material on the biochip takes place by images being taken at two different levels within said target range and said images being evaluated.

2. Method according to claim 1,
**characterized in that** a target interval is determined on the basis of the detected location and/or a position of said labeling (7), wherein said cross table is moved during focusing.

3. Method according to claim 1 or 2,
**characterized in that** on the basis of said detected position and/or location of said labeling (7), said cross table (9) is at least moved from a first position, in which said object lens (10) has a first distance from said biological material (6), into a second position, in which said object lens (10) has a second distance from said biological material (6), and at two different levels between said first and said second position, at least one image of said biological material (6) is respectively taken and transferred to said evaluation unit.

4. Method according to one of claims 1 to 3,
**characterized in that** for detection of said labeling (7) and for exposure of said biological material (6), light with different wavelengths is used.

5. Method according to one of claims 1 to 4,
**characterized in that**, during focusing and while said cross table (9) is located within said target range, said biological material (6) is exposed to light and at least one image of said biological material (6) is respectively recorded at two different levels within said target range and transferred to said evaluation unit.

6. Method according to one of claims 1 to 5,
**characterized in that**, on the basis of a comparison of said recorded images in said evaluation unit, a focus level is determined.

7. Method according to claim 6,
**characterized in that** images lying at said focus level are transferred to a device for the preparation of diagnostic findings.

## Revendications

1. Procédé pour l'analyse automatisée de matière biologique (6) avec un microscope (8), sur la table à mouvements croisés (9) duquel la matière biologique (6) est agencée entre un porte-objet (1) ou une plaque d'analyse et au moins un couvercle (4), selon lequel la matière biologique (6) est exposée à de la lumière, selon lequel au moins une image, agrandie à l'aide de l'objectif (10) du microscope (8), de la matière biologique (6) est acquise avec une unité d'acquisition d'images (17) et transférée à une unité d'évaluation, et selon lequel un repère (7) est détecté avec un dispositif de mise au point automatique (11) sur la matière biologique (6), une position et/ou situation du repère (7) est déterminée et, sur la base de la position et/ou situation détectée du repère (7), une mise au point sur la matière biologique (6) est réalisée par déplacement ciblé de la table à mouvements croisés,
**caractérisé en ce que** la matière biologique (6) est mise à disposition sur une biopuce (2) fabriquée par fragmentation et division d'un verre de protection, sur laquelle la matière biologique (6) est agencée, et **en ce que** le repère (7) est détecté sur une surface de la biopuce (2),
- sur la base d'une détermination d'une situation et/ou d'une position du repère, un intervalle cible étant défini,
- l'intervalle cible comprenant un écart maximal et minimal avec l'objectif,
- et une mise au moins sur la matière biologique sur la biopuce étant effectuée, par acquisition d'images dans l'intervalle cible dans au moins deux plans différents, et évaluation de celles-ci.

2. Procédé selon la revendication 1, **caractérisé en ce que**, sur la base de la position et/ou situation détectée du repère (7), une plage cible est déterminée, dans laquelle la table à mouvements croisés (9) est déplacée pendant la mise au point.

3. Procédé selon la revendication 1 ou 2, **caractérisé en ce que**, sur la base de la position et/ou situation détectée du repère (7), la table à mouvements croisés (9) est déplacée au moins à partir d'une première position, dans laquelle l'objectif (10) présente un premier écart avec la matière biologique (6), dans une deuxième position, dans laquelle l'objectif (10) présente un deuxième écart avec la matière biologique (6) et, dans deux plans différents entre la première et la deuxième position, à chaque fois au moins une image de la matière biologique (6) est acquise et transférée à l'unité d'évaluation.

4. Procédé selon l'une quelconque des revendications 1 à 3, **caractérisé en ce que** de la lumière d'une longueur d'onde différente est utilisée pour la détection du repère (7) et pour l'exposition à de la lumière de la matière biologique (6).

5. Procédé selon l'une quelconque des revendications 1 à 4, **caractérisé en ce que**, pendant la mise au point et pendant que la table à mouvements croisés (9) se trouve dans la plage cible, la matière biologique (6) est exposée à de la lumière et, dans deux plans différents dans la plage cible, à chaque fois au moins une image de la matière biologique (6) est acquise et transférée à l'unité d'évaluation.

6. Procédé selon l'une quelconque des revendications 1 à 5, **caractérisé en ce qu'**un plan de mise au point est déterminé sur la base d'une comparaison des images acquises dans l'unité d'évaluation.

7. Procédé selon la revendication 6, **caractérisé en ce que** des images se trouvant dans le plan de mise au point sont transférées à un dispositif pour l'établissement de résultats.
